# EUROPÄISCHE PATENTSCHRIFT

(11) **EP 3 300 204 B1**
(45) Veröffentlichungstag und Bekanntmachung des Hinweises auf die Patenterteilung: **17.06.2020**
(21) Anmeldenummer: 17191676.0
(22) Anmeldetag: 18.09.2017
(51) Int. Cl.: H02J 7/14, B60H 1/22, B60L 50/50, B60L 58/24, B60L 58/10, B60L 1/00, B60L 1/08, H02J 1/02

(54) **HOCHVOLT-KRAFTFAHRZEUGBORDNETZ**
HIGH VOLTAGE VEHICLE ON-BOARD POWER SYSTEM
RÉSEAU D'ALIMENTATION DE BORD DE VÉHICULE AUTOMOBILE À HAUTE TENSION

(30) Priorität: 22.09.2016 DE 102016218276
(43) Veröffentlichungstag der Anmeldung: 28.03.2018
(73) Patentinhaber: Eberspächer catem GmbH & Co. KG, 76863 Herxheim (DE)
(72) Erfinder: TCHOBANOV, Dimitar, 90443 Nürnberg (DE); BILLMANN, Markus, 91448 Emskirchen (DE); RIEFERT, Eugen, 76149 Karlsruhe (DE); LAUSSER, Christof, 76887 Bad Bergzabern (DE); SUTTER, Ulrich, 76829 Landau (DE)
(74) Vertreter: Grünecker Patent- und Rechtsanwälte PartG mbB

(56) Entgegenhaltungen:
- DE-A1- 4 133 901
- DE-A1-102014 209 267
- GB-A- 2 523 197
- US-A1- 2014 035 525
- US-B1- 6 697 270

## Beschreibung

Die vorliegende Erfindung betrifft ein elektrisches Kraftfahrzeugbordnetz. Insbesondere betrifft die Erfindung ein Hochvolt-Kraftfahrzeugbordnetz, wie es zum Beispiel bei Fahrzeugen mit Elektroantrieb, also Hybrid-Kraftfahrzeugen oder reinen Elektrofahrzeugen zum Einsatz kommt.

Generell dient ein Kraftfahrzeug-Bordnetz dazu, eine Vielzahl von Verbrauchern, Steuergeräten und Signalkomponenten in einem Kraftfahrzeug mit Strom zu versorgen. Der Strom wird entweder einer Batterie als Energiespeicher oder, beim Betrieb des Kraftfahrzeugmotors einem Generator (Lichtmaschine) entnommen. Über Relais oder einen elektrischen Stromverteiler mit Halbleiterschaltern kann eine Vielzahl einzelner Verbraucher (elektrischer Fahrzeugkomponenten) über individuelle Laststromkreise mit Strom aus dem Kraftfahrzeug-Bordnetz versorgt werden.

Herkömmliche Fahrzeugbordnetze basieren auf einer Batterienennspannung von 12 V.

Eine besondere Situation ergibt sich in Fahrzeugen mit Elektroantrieb (Elektro- und Hybridfahrzeuge) bei denen die Batterie (Akkumulator) nicht nur der Energieversorgung der herkömmlichen elektrischen Fahrzeugkomponenten dient, sondern darüber hinaus auch Traktionsenergie bereitstellen muss. Bei derartigen Fahrzeugen sind generell Bordnetzspannungen im automobiltechnischen Hochvoltbereich üblich. Ein entscheidender Vorteil höherer Spannung liegt darin, dass der bei hohen Leistungen benötigte Strom deutlich niedriger ist als in einem herkömmlichen 12 Volt-Bordnetz.

Unter automobiltechnischem Hochvoltbereich versteht man allgemein den Bereich oberhalb von 60 Volt Gleichstrom (oder 25 Volt Wechselstrom). Bei Elektro- und Hybridfahrzeugen sind insbesondere Bordnetzspannungen im Bereich von 150 bis 500 Volt (z. B. 300 Volt, 380 Volt oder 420 Volt) üblich. Diese Spannungen sind für Elektrofahrzeuge mit Antrieben bis etwa 100 kW ausreichend und erlauben den Einsatz breit verfügbarer 600 V-Leistungshalbleiter. Bei höheren Antriebsleistungen, wie in Sport-oder Nutzfahrzeugen können auch noch höhere Spannungen, etwa im Bereich von 650 V bis 800 V eingesetzt werden, die dann jedoch den Einsatz spezieller Leistungshalbleiter in der Leistungselektronik erfordern, die eine Sperrfähigkeit von mindestens 1200 V aufweisen.

Kraftfahrzeugbordnetze im Hochvoltbereich sind jedoch auch nicht unproblematisch, insbesondere im Hinblick auf elektromagnetische Störungen, die durch den Einsatz einer Vielzahl von Schaltkomponenten zum Schalten erheblicher elektrischer Leistungen entstehen (elektromagnetische Verträglichkeit -EMV). Diese Komponenten verwenden in der Regel Bauelemente der Leistungselektronik auf Halbleiterbasis. Zur Minimierung von elektrischen und Wärmeverlusten erfolgen die Schaltvorgänge möglichst schnell und mit steilen Taktflanken. Dies bringt jedoch teils hochfrequente transiente Störungen mit sich, welche die empfindliche Kraftfahrzeugelektronik negativ beeinflussen können. Andererseits können in bestimmten Fällen beim Einschalten eines Verbrauchers unerwünschte elektromagnetische Schwingungen im Bordnetz auftreten, die je nach Impedanzlage im Bordnetz unter Bedingungen der elektromagnetischen Resonanz verstärkt werden können.

Aus dem Stand der Technik ist DE102014209267A1 bekannt. Es beschreibt ein Fahrzeug mit elektrischem Antriebsstrang bei dem durch Zuschaltung von Heizelementen Überspannungsspitzen gedämpft werden.

GB2523197A beschreibt ein weiteres Verfahren zur Dämpfung von Überspannungsspitzen in einem Fahrzeugbordnetz.

Es ist Aufgabe der vorliegenden Erfindung, unerwünschte elektromagnetische Schwingungen durch transiente Störungen in einem Hochvolt-Kraftfahrzeugbordnetz zu verhindern bzw. zu minimieren.

Diese Aufgabe wird mit den Merkmalen der unabhängigen Patentansprüche gelöst.

Gemäß einem ersten Aspekt der vorliegenden Erfindung wird ein Hochvolt-Kraftfahrzeugbordnetz bereitgestellt. Das Hochvolt-Kraftfahrzeugbordnetz umfasst wenigstens eine erste Last, eine zweite Last und eine Steuereinheit. Die erste Last und die zweite Last sind individuell zuschaltbar. Die zweite Last umfasst eine Heizeinrichtung, deren Zuschalten die Impedanz des Kraftfahrzeugbordnetzes derart verändert, dass das Zuschalten der zweiten Last vor dem Zuschalten der ersten Last die Entstehung von elektromagnetischen Schwingungen in dem Kraftfahrzeugbordnetz bei dem Zuschalten der ersten Last verhindert. Die Steuereinrichtung ist eingerichtet, die zweite Last jeweils vor dem Zuschalten der ersten Last zuzuschalten.

Gemäß einem zweiten Aspekt der vorliegenden Erfindung wird ein Verfahren zum Betreiben eines Hochvolt-Kraftfahrzeugbordnetzes bereitgestellt. Das Hochvolt-Kraftfahrzeugbordnetz umfasst wenigstens eine individuell zuschaltbare erste Last und eine individuell zuschaltbare zweite Last. Die zweite Last umfasst eine elektrische Heizeinrichtung, deren Zuschalten die Impedanz des Kraftfahrzeugbordnetzes derart verändert, dass das Zuschalten der zweiten Last vor dem Zuschalten der ersten Last die Entstehung von elektromagnetischen Schwingungen in dem Kraftfahrzeugbordnetz bei dem Zuschalten der ersten Last verhindert. Das Verfahren umfasst die Schritte des Zuschaltens der ersten Last und des Zuschaltens der zweiten Last vor dem Zuschalten der ersten Last.

Es ist der besondere Ansatz der vorliegenden Erfindung, das Entstehen und die Verstärkung unerwünschter elektromagnetischer Schwingungen in einem Hochvolt (HV)-Kraftfahrzeugbordnetz mit einfachen schaltungstechnischen Maßnahmen ohne die Notwendigkeit zusätzlicher Bordnetzkomponenten zu verhindern. Solche Schwingungen entstehen insbesondere beim Zuschalten bestimmter Verbraucher (Geräte) im Fahrzeugbordnetz, wenn die Impedanzlage aufgrund einer Resonanz zu einer Verstärkung der Schwingungen führt. Zu ihrer Verhinderung nutzt man erfindungsgemäß die Tatsache aus, dass das Zuschalten eines weiteren Verbrauchers die Impedanzlage im Bordnetz verschiebt und somit keine unerwünschte Resonanz mehr oder eine stärkere Dämpfung auftritt. Wenn bekannt ist, dass das Zuschalten eines bestimmten Geräts im Bordnetz eine Schwingung auslöst, wird deshalb erfindungsgemäß die elektrische Hochvolt-Kraftfahrzeugheizung unmittelbar (zum Beispiel eine halbe Sekunde) vor dem Einschalten des die Störung verursachenden Geräts kurzzeitig (für wenige Sekunden) zugeschaltet, so dass das Zuschalten des anderen Geräts keine Schwingungen im Bordnetz mehr auslösen kann. Der Heizer als ohnehin vorhandene Bordnetzkomponente wird somit erfindungsgemäß kurzzeitig für einen völlig anderen Zweck eingesetzt, nämlich um die Gesamtimpedanz zu verstellen und das Bordnetz gegen Störungen abzusichern.

Ein elektrisches Hochvolt-Kraftfahrzeugbordnetz kann eine ganze Reihe von Komponenten (Verbrauchern) umfassen, die die unerwünschten Störschwingungen verursachen können. Dies sind natürlich in erster Linie die zum Antrieb des Fahrzeugs erforderlichen leistungsstarken elektrischen Motoren (Traktionsmotoren) bzw. die zu deren Ansteuerung erforderlichen leistungselektronischen Komponenten. Insbesondere sind die Traktionsmotoren häufig über Pulswechselrichter an das Bordnetz angeschlossen, deren Halbleiterbauelemente mit möglichst steilen Taktflanken schalten, um thermische Verluste zu minimieren. Weitere mögliche Störkomponenten im Bordnetz können zum Beispiel ein Lüfterantrieb, der Antrieb des Kompressors des Klimageräts, einer Wasser-oder Ölpumpe oder aber andere Nebenaggregate sein. Auch wird häufig neben dem Hochvolt-Bordnetz für bestimmte elektrische/elektronische Komponenten auch ein konventionelles 12V (Volt)- Bordnetz beibehalten, um für solche Komponenten, etwa der Unterhaltungselektronik, die herkömmliche 12V-Steuerelektronik weiterhin nutzen zu können. Dieses 12V-Bordnetz muss jedoch vom Hochvolt-Bordnetz galvanisch getrennt werden, wofür Gleichstrom-Gleichstromwandler (DC/DC-Wandler) eingesetzt werden, welche ihrerseits die Ursache für Störungen (Bordnetz-Störungen, EMV-Störungen) sein können. Ein DC/DC-Wandler kann auch erforderlich sein, um eine gegebenenfalls im Hochvolt-Bordnetz vorhandene Brennstoffzelle anzuschließen.

Gemäß der vorliegenden Erfindung umfasst die erste Last einen elektrischen Traktionsmotor des Kraftfahrzeugs und eine dazugehörige Leistungselektronik.

Gemäß einer bevorzugten Ausführungsform der vorliegenden Erfindung umfasst die erste Last einen Pulswechselrichter.

Vorzugsweise erfolgt das Zuschalten der Heizung nur kurzzeitig, aber wenigstens für die Dauer eines Einschaltvorgangs der ersten Last. Da im Regelfall davon auszugehen ist, dass die Heizung in dem Moment des Zuschaltens des störenden Geräts für ihren eigentlichen Zweck, die Temperatur des Fahrgastraums zu erhöhen, gerade nicht erforderlich ist, sollte sie nur so kurz wie möglich zugeschaltet werden, um keine spürbare Heizleistung abzugeben. Andererseits muss die Zuschaltung hinreichend lange erfolgen, um die kurze Übergangsphase (transiente Phase, während der die der ersten Last zugeführte elektrische Spannung/Leistung von Null auf einen im eingeschalteten Zustand üblichen Normalwert steigt) beim Einschalten des anderen Geräts, während derer die Störschwingungen entstehen, zu überbrücken. Die Übergangsphase hat in der Regel eine Dauer von nur wenigen Sekunden. Vorzugsweise erfolgt deshalb das Zuschalten der Heizung für eine Zeitdauer von einigen Sekunden, insbesondere weniger als 10 Sekunden oder weiter vorzugsweise weniger als 5 Sekunden. Natürlich ist prinzipiell auch eine längere Einschaltphase der Heizung denkbar, wenn dies im Einzelfall möglich und sinnvoll ist.

Vorzugsweise erfolgt erfindungsgemäß das Zuschalten der ersten Last mit einer gewissen Verzögerung gegenüber einem Einschaltbefehl, der je nach Art der ersten Last zum Beispiel von einem Benutzer oder aber auch automatisch im Betrieb von einer anderen Bordnetzkomponente gegeben werden kann. Hierzu ist die Steuereinrichtung derart ausgestaltet, dass sie beim Empfang eines Einschaltbefehls für die erste Last diesen Befehl nicht sofort ausführt, sondern zunächst ein Signal zum Einschalten der zweiten Last ausgibt. Diese wird dann eingeschaltet, und erst nach ihrem Einschalten erfolgt das verzögerte Einschalten der ersten Last. Somit ist sichergestellt, dass die erste Last erst nach der gewünschten Veränderung der Impedanz des Bordnetzes zugeschaltet wird. Die maßgebliche Zeitdauer der Verzögerung ist kürzer als die Einschaltdauer der Heizung insgesamt, und liegt in der Größenordnung unterhalb einer Sekunde, zum Beispiel eine halbe Sekunde.

Vorzugsweise kann eine erfindungsgemäß benutzte Kraftfahrzeug-Heizvorrichtung mehrere Heizstufen (Heizkreise) umfassen, die in der Regel separat zuschaltbar sind. Da diese Heizstufen häufig unterschiedlichen Leistungsstufen entsprechen, unterschiedliche Impedanz haben und somit auch im Falle des Einschaltens unterschiedliche Veränderungen der Gesamtimpedanz des Bordnetzes hervorrufen, wird im Falle einer Heizvorrichtung mit mehreren Heizstufen vorzugsweise eine vorher festgelegte bestimmte Heizstufe als die zweite Last zugeschaltet. Da die Störkomponenten häufig Komponenten mit hohen Leistungen und hohen Impedanzen sind, ist dies in bevorzugten Ausführungsformen die leistungsstärkste verfügbare Heizstufe.

Es ist darüber hinaus auch denkbar, das Vorhandensein mehrerer Heizstufen mit unterschiedlichen Leistungen/Impedanzen dahingehend auszunutzen, dass man verschiedene Heizstufen nutzen kann, um die beim Zuschalten verschiedener Verbraucher mit unterschiedlichen Impedanzen auftretenden Störschwingungen zu unterdrücken. Gemäß einer bevorzugten Ausführungsform verfügt das Kraftfahrzeugbordnetz neben der ersten und der zweiten Last über eine dritte Last, welche wie die erste Last beim Zuschalten unerwünschte elektromagnetische Schwingungen verursacht und die Heizvorrichtung verfügt über mehrere Heizstufen unterschiedlicher Leistung. Hierbei wird jeweils vor dem Einschalten der ersten und der dritten Last eine unterschiedliche der Heizstufen als jeweilige zweite Last kurzzeitig zugeschaltet.

Weitere vorteilhafte Ausgestaltungen sind Gegenstand der Unteransprüche.

Die Erfindung ist durch die Ansprüche definiert.

Im Folgenden wird die vorliegende Erfindung anhand bevorzugter Ausführungsformen im Zusammenhang mit den beiliegenden Zeichnungen erläutert, in denen:
Fig. 1 einen allgemeinen Überblick über ein erfindungsgemäßes Fahrzeugbordnetz darstellt;
Fig. 2 eine beispielhafte Darstellung von Komponenten eines Bordnetzes gemäß Ausführungsformen ist;
Fig. 3 eine schematische Darstellung des Zeitablaufs beim kurzzeitigen Zuschalten einer Heizeinrichtung als zweiter Last unmittelbar vor dem Einschalten eines anderen Verbrauchers (erste Last) ist;
Fig. 4 ein Schema ist, welches das Zuschalten einer beispielhaften mehrstufigen Kraftfahrzeugheizung darstellt; und
Fig. 5 ein Ablaufdiagramm eines erfindungsgemäßen Verfahrens beim Einschalten eines Verbrauchers (erste Last) zeigt.

Die folgende detaillierte Beschreibung dient der Darstellung der Erfindung anhand ausgewählter Ausführungsformen und unter Bezug auf die Zeichnungen. Die vorliegende Erfindung, wie in den Patentansprüchen definiert, ist jedoch nicht auf die nachstehend beschriebenen Ausführungsformen und insbesondere die darin beispielhaft genannten Parameterwerte beschränkt.

Es ist bekannt, dass in Hochvolt-Kraftfahrzeugbordnetzen Probleme mit unerwünschten elektromagnetischen Schwingungen im Netz entstehen können, die insbesondere beim Einschalten bestimmter Verbraucher auftreten, wenn die Impedanzlage im Bordnetz eine Verstärkung von beim Schalten in Schaltelementen auftretenden Schwingungen durch Resonanz bedingt. Derartige Schwingungen können beim Zuschalten verschiedenartiger Komponenten eines Hochvolt-Bordnetzes entstehen. Insbesondere bewirkt das Zuschalten einer Fahrzeugheizung bzw. einzelner Elemente (Heizstufen) der Fahrzeugheizung eine Impedanzänderung im Bordnetz.

Die vorliegende Erfindung nutzt diese Tatsache aus, um Schwingungen zu verhindern oder zumindest zu minimieren, die beim Einschalten von Bordnetzkomponenten auftreten können. Wenn man weiß, dass das Zuschalten der Heizung oder einer bestimmten Heizstufe zu einer Impedanzänderung führt, so kann man diese ausnutzen, um die Impedanz des Bordnetzes vor dem Einschalten einer anderen Bordnetzkomponente derart zu verändern, dass die Zuschaltung der anderen Bordnetzkomponente keine Schwingungen im Bordnetz mehr auslösen kann. Zu diesem Zweck wird die Heizeinrichtung unmittelbar vor dem Einschalten der störenden Bordnetzkomponente zugeschaltet. Die Heizeinrichtung wird also unabhängig vom Heizen kurzzeitig für einen völlig anderen Zweck im Bordnetz eingesetzt.

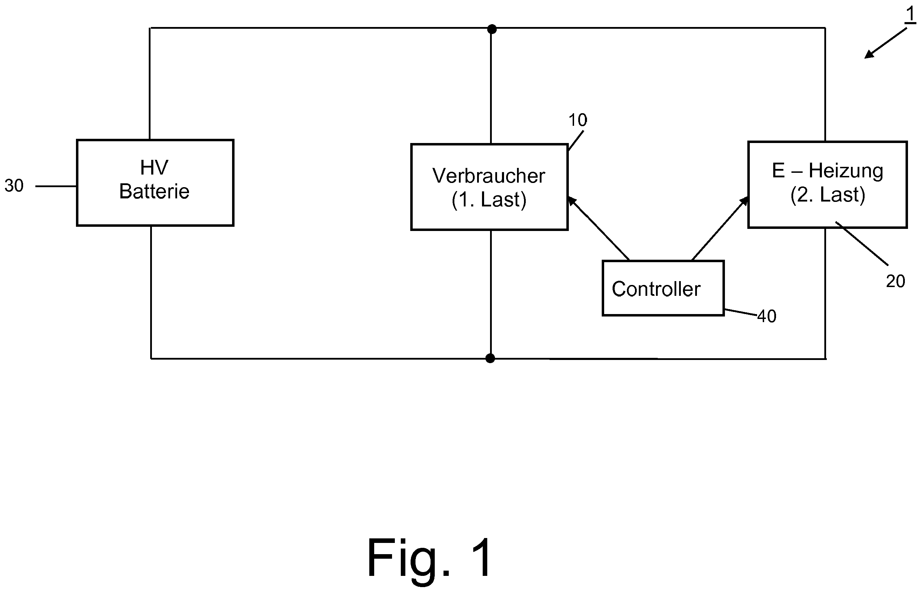

Fig. 1 gibt einen vereinfachten Überblick über die wesentlichen Elemente eines Hochvolt-Kraftfahrzeugbordnetzes 1, in welchem die vorliegende Erfindung zur Anwendung kommen kann. Das Kraftfahrzeugbordnetz verfügt über wenigstens zwei Verbraucher (Lasten). Insbesondere ist ein erster Verbraucher (erste Last) 10 dargestellt, bei dessen Zuschalten unerwünschte Schwingungen im Bordnetz auftreten. Die zweite Last 20 ist eine elektrische Heizung, die erfindungsgemäß zum Verhindern der unerwünschten Schwingungen eingesetzt wird. Weiterhin ist eine Hochvoltbatterie 30, die das gesamte Bordnetz mit Energie versorgt, dargestellt. Eine Steuereinrichtung (Controller) 40 steuert die im Bordnetz erforderlichen Schaltvorgänge.

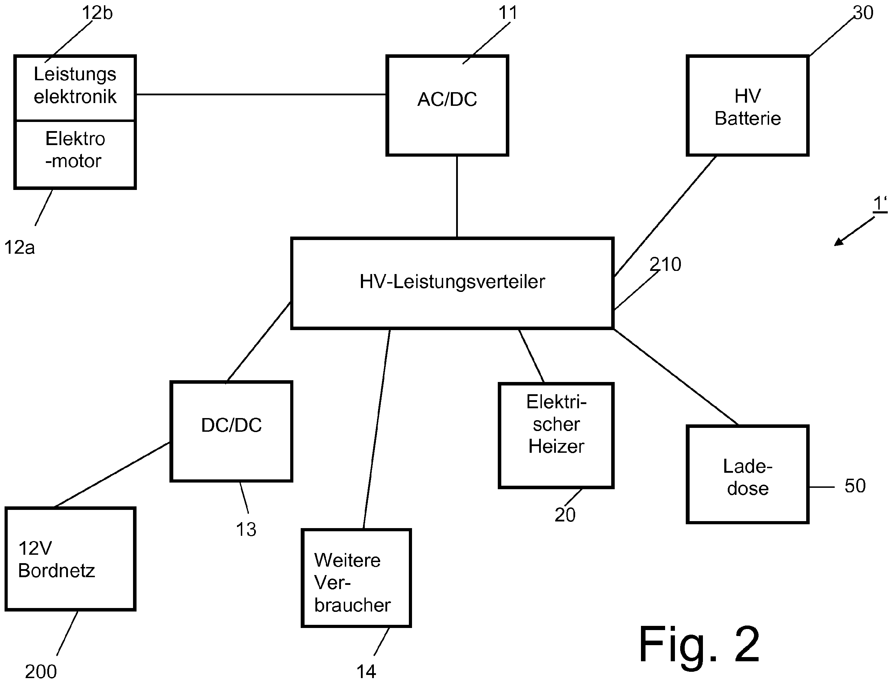

Eine detailliertere Darstellung möglicher Komponenten eines beispielhaften Hochvolt-Kraftfahrzeugbordnetzes 1' ist in Fig. 2 gezeigt.

Neben der Hochvoltbatterie 30 und der elektrischen Heizeinrichtung (zweite Last) 20 sind eine ganze Reihe exemplarischer Geräte gezeigt, deren Einschalten zu Schwingungen im Bordnetz führen kann, und die deshalb als Beispiele einer ersten Last 10 angesehen werden können.

Die wichtigste Komponente in einem Fahrzeug mit Elektroantrieb ist ein Elektromotor zum Vortrieb des Fahrzeugs (Traktionsmotor) 12a. Zu dessen Ansteuerung ist eine entsprechende Leistungselektronik 12b vorgesehen. Da der Traktionsmotor 12a mit Wechselstrom arbeitet, die Hochvoltbatterie 30 jedoch Gleichstrom zur Verfügung stellt, ist der Motor über eine Einrichtung zur Wechselrichtung (AC/DC) 11 angeschlossen. Üblicherweise werden für diesen Zweck Pulswechselrichter verwendet. Bei der üblichen Verwendung von Drehstrommotoren ist zusätzlich noch ein Frequenzumrichter (FU) erforderlich, der eingangsseitig mit einer und ausgangsseitig mit drei Phasen betrieben wird und ebenfalls eine Störquelle darstellt.

Des weiteren verfügt das exemplarische Bordnetz der Fig. 2 über einen Gleichstromwandler (DC/DC-Konverter) 13, über den ein galvanisch getrenntes herkömmliches 12V-Bordnetz 200 mit dem Hochvolt-Bordnetz 1' verbunden wird. Weitere Verbraucher sind zusammengefasst in dem Block 14 dargestellt. Solche Verbraucher können zum Beispiel ein elektrischer Klimakompressor, ein Ventilator zur Kühlung/Lüftung, ein Wischermotor, eine Wasser-oder eine Ölpumpe oder andere Nebenaggregate sein.

Eine zentrale Komponente zur Verteilung der Leistung im Hochvolt-Bordnetz ist der HV-Leistungsverteiler 210. Dieser dient zur Stromversorgung der an das Hochvolt-Bordnetz angeschlossenen Nebenaggregate. Die Stromverteilung/Leistungsverteilung kann über ein HV-Bussystem (nicht dargestellt) erfolgen. Eine Ladesteckdose 50 ist über ein entsprechendes Ladegerät, im Bild nicht dargestellt, ebenfalls an den HV-Leistungsverteiler 210 angeschlossen. Der in Fig. 1 gezeigte Controller 40 kann in den HV-Leistungsverteiler 210 integriert sein, oder auch als separate Komponente ausgeführt sein.

Ebenfalls über ein HV-Bordnetz verfügen Fahrzeuge, bei denen die Traktionsenergie über eine Brennstoffzelle zur Verfügung gestellt wird. In diesem Falle ist als weitere Bordnetzkomponente ein Brennstoffzellenstack vorhanden, der zum Beispiel über einen weiteren DC/DC-Konverter an den HV-Bus bzw. den HV-Leistungsverteiler 210 angeschlossen ist.

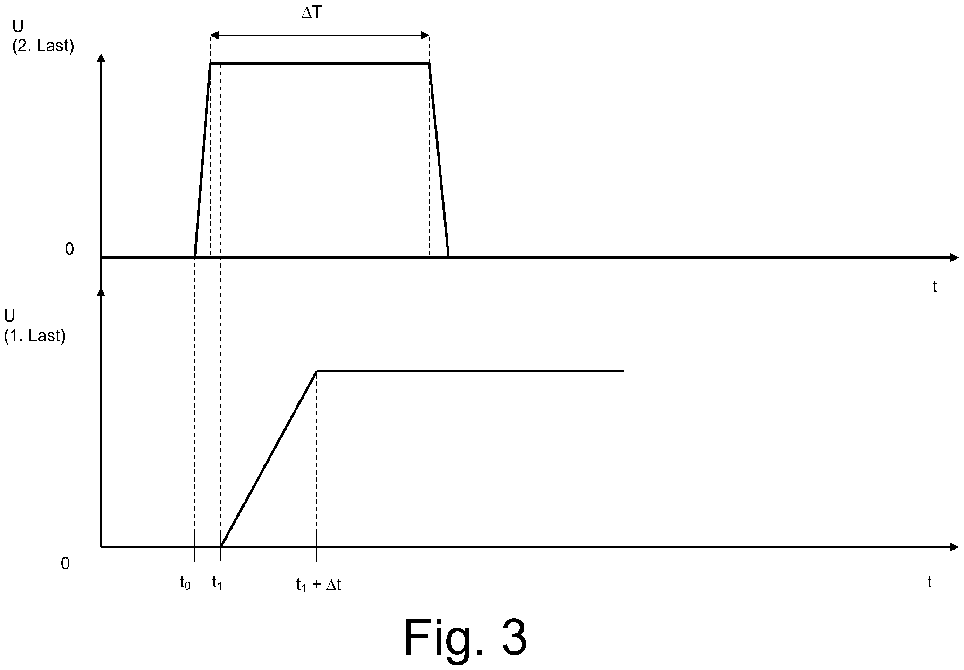

Fig. 3 zeigt ein Zeitablaufdiagramm beim Einschalten eines Verbrauchers (erste Last) 10, wobei das Auftreten von Störschwingungen erfindungsgemäß verhindert werden soll.

Im unteren Diagramm ist der Zeitablauf des Einschaltens des Verbrauchers (erste Last) 10 und im oberen Diagramm der entsprechende Zeitablauf für die zweite Last 20 (die Heizeinrichtung) gezeigt. Beide Diagramme verfügen über eine gemeinsame Zeitachse (die horizontale Achse t). In vertikaler Richtung ist der Verlauf einer maßgeblichen elektrischen Größe für die jeweilige Last, zum Beispiel der angelegten Spannung U, dargestellt. Es ist zu beachten, dass es in den Diagrammen der Fig. 3 lediglich auf den zeitlichen Ablauf ankommt. Die Höhe der dargestellten Spannungswerte hängt von der Art der Lasten ab. Insbesondere zeigt die Zeichnung keine maßstabsgerechte Darstellung der Spannung an der ersten Last (unten) und der zweiten Last (oben).

In dem in den Diagrammen dargestellten Fall wird angenommen, dass zu einem Zeitpunkt t₀ ein Steuerbefehl an die Steuereinrichtung 40 ergeht, die erste Last 10 einzuschalten. Dieser Steuerbefehl wird erfindungsgemäß jedoch nicht sofort, d.h. unverzüglich, umgesetzt. Vielmehr erzeugt die Steuereinrichtung 40 nach Empfangen des Steuerbefehls zum Einschalten der ersten Last 10 zunächst ihrerseits einen Befehl zum kurzzeitigen Einschalten der zweiten Last (Heizeinrichtung) 20. Dieser wird an die Leistungselektronik zum Ansteuern der Heizeinrichtung gesendet und die Heizeinrichtung wird eingeschaltet (die Zeitdauer vom Empfang des Einschaltbefehls für die erste Last bis zum Beginn des Einschaltens der zweiten Last wird in dem Diagramm vernachlässigt). Im gezeigten Beispiel wird angenommen, dass dieser Einschaltvorgang zu einem Zeitpunkt t₁ abgeschlossen ist. Zum Zeitpunkt t₁ wird deshalb von der Steuereinrichtung 40 das Einschalten der ersten Last 10 ausgeführt. Mit anderen Worten, wird der zum Zeitpunkt t₀ eingegangene Einschaltbefehl für die erste Last 10 zeitverzögert zum Zeitpunkt t₁ ausgeführt. Zu diesem Zeitpunkt ist die Heizeinrichtung 20 bereits eingeschaltet, wodurch die Impedanz des Bordnetzes so verändert wurde, dass keine Resonanz für die beim Einschalten der ersten Last 10 auftretenden Schwingungen mehr besteht. Der Einschaltvorgang selbst erfolgt nicht momentan, sondern benötigt ebenfalls eine bestimmte Zeitdauer (Δt). Wie im Diagramm dargestellt, wird somit angenommen, dass der Einschaltvorgang der ersten Last zum Zeitpunkt t₁ + Δt abgeschlossen ist. Bei der Ansteuerung der Heizeinrichtung ist darauf zu achten, dass diese wenigstens so lange eingeschaltet bleibt, bis der Einschaltvorgang der Last 10 abgeschlossen ist. Die im oberen Diagramm dargestellt Einschaltdauer ΔT der Heizeinrichtung 20 muss deshalb größer als die zum Einschalten der ersten Last 10 erforderliche Zeitdauer Δt sein. Andererseits sollte natürlich das Einschalten der Heizung 20 nur so kurz wie möglich erfolgen, um ein unerwünschtes Heizen zu verhindern. Das nur kurzzeitige Einschalten der Heizung 20 ist aber an sich nicht wesentlich für die vorliegende Erfindung. Dies stellt lediglich ein Komfortmerkmal dar.

Zum Abschalten der Heizung (zum Zeitpunkt t₁ + ΔT) wird gemäß einer Ausführungsform von der Steuereinrichtung 40 ein weiterer Befehl an die Heizeinrichtung ausgegeben. Alternativ wäre auch denkbar, dass die Steuereinrichtung 40 einen speziellen Befehl zum nur kurzzeitigen Einschalten der Heizeinrichtung 20 ausgibt. Die Zeitdauer (ΔT) eines solchen kurzzeitigen Einschaltens wäre dann in der Ansteuerschaltung der Heizeinrichtung 20 selbst hinterlegt, und die Heizeinrichtung 20 würde von sich aus, ohne einen weiteren Befehl von der Steuereinrichtung 40, nach Ablauf der Einschaltdauer ΔT wieder ausgeschaltet.

Die zeitliche Länge der Einschaltdauer ΔT wie auch der Zeitverzögerung t₁ - t₀ beim Einschalten der ersten Last 10 hängt natürlich von den Gegebenheiten, insbesondere von der Art der ersten Last 10 und der Bauart der Heizeinrichtung 20 ab. In der Regel ist jedoch davon auszugehen, dass eine Einschaltdauer im Bereich einiger Sekunden oder darunter (z.B. zwischen 10ms (Millisekunden) und 10s (Sekunden)) ausreichend ist, bzw. die Zeitverzögerung beim Einschalten des Verbrauchers (erste Last 10) sogar nur Bruchteile einer Sekunde beträgt (zum Beispiel im Bereich von 100µs (Mikrosekunden) bis 500ms liegt), also für den Benutzer nicht ins Gewicht fällt. In einem Beispiel wird das Einschalten eines Klimakompressors (erste Last) um 100ms verzögert, d.h. die zweite Last (Heizeinrichtung bzw. eine bestimmte Heizstufe) wird 100ms vor dem Klimakompressor zugeschaltet. Nach 2s wird sie wieder ausgeschaltet.

Elektrische Heizeinrichtungen für Kraftfahrzeuge unterscheiden sich erheblich nach ihrer Bauart. Während elektrische Heizungen in konventionellen Kraftfahrzeugen vor allem als Zusatzheizer eingesetzt wurden (während der Großteil der erforderlichen Wärme als Abwärme eines Verbrennungsmotors zur Verfügung stand) erfolgt in Fahrzeugen mit Elektroantrieb das Heizen ausschließlich elektrisch. Für die Bereitstellung der Wärme werden häufig sogenannte PTC (positive temperature coefficient)-Heizelemente eingesetzt. Diese sind selbstregelnd, da sie mit zunehmender Erwärmung einen höheren Widerstand zeigen, und somit bei gleicher Spannung eine geringere Menge an Strom durchlassen. Die selbstregelnden Eigenschaften der PTC-Heizelemente verhindern somit eine Überhitzung.

Die Luft im Fahrgastinnenraum wird mit Hilfe der PTC-Widerstandsheizelemente entweder direkt (Luftheizung) oder indirekt über einen Warmwasserkreislauf, in dem warmes Wasser durch Radiatoren strömt (Warmwasserheizung), erwärmt. Im ersten Fall dient also Luft, im zweiten Wasser als Wärmeträger.

Bei der Ansteuerung von Kraftfahrzeugheizungen ist es wünschenswert, eine elektrische Heizvorrichtung so anzusteuern, dass die Heizleistung möglichst genau an eine Leistungsvorgabe angepasst wird. Damit können vorhandene Leistungsreserven im Bordnetz optimal ausgenutzt werden. Dies gilt insbesondere für Fahrzeuge mit Elektroantrieb, bei denen die Energie für den Fahrzeugantrieb und die elektrische Heizung aus der gleichen Quelle gespeist wird.

Deshalb verwendet man Kraftfahrzeugheizungen mit einer Mehrzahl von separat ansteuerbaren Heizstufen (Heizkreisen), die jeweils ein oder mehrere Heizelemente (zum Beispiel PTC-Widerstandsheizelemente) aufweisen können. Insbesondere können hierbei Heizstufen unterschiedlicher Leistung zum Einsatz kommen, um variable Heizleistungen durch Kombination entsprechender Heizstufen möglichst flexibel einstellen zu können.

Da Heizstufen unterschiedlicher Leistung das Bordnetz mit unterschiedlichen Impedanzen beeinflussen, sind in einem solchen Fall nicht alle Heizstufen gleichermaßen geeignet, das Ausbreiten unerwünschter Schwingungen durch Verstimmung der Resonanz zu verhindern. Vielmehr wird dann eine vorbestimmte Heizstufe verwendet, deren Impedanz für eine erfindungsgemäße Unterdrückung der Störschwingungen geeignet ist. Angesichts hoher Leistung vieler Komponenten im HV-Bordnetz ist dies häufig die Heizstufe mit der höchsten Leistung ("größte Heizstufe").

Es ist aber auch denkbar, zur Entstörung beim Einschalten verschiedener Verbraucher unterschiedliche Heizstufen mit unterschiedlichen Impedanzen erfindungsgemäß einzusetzen. Hierbei werden den einzelnen Verbrauchern entsprechende Heizstufen oder deren Kombinationen zugeordnet, und deren kurzzeitiges Zuschalten durch entsprechende Befehle veranlasst. Dies ermöglicht es, flexibel auf die Anforderungen bei verschiedenen Fahrzeugplattformen zu reagieren. Zum Beispiel bekommt man bei 3 Heizstufen unterschiedlicher Impedanz 2³ - 1 = 7 verschiedene Möglichkeiten, die Impedanz und damit auch die Dämpfung im HV-Bordnetz zu beeinflussen.

Ein anderes Konzept einer flexiblen Einstellung der Heizleistung beruht darauf, dass die Heizleistung kontinuierlich eingestellt werden kann. Dies erfolgt insbesondere über Pulsbreitenmodulation (pulse width modulation - PWM). Im Interesse eines einfachen Aufbaus und um bei der Pulsbreitenmodulation ihrerseits insbesondere im höheren Leistungsbereich massiv auftretende elektromagnetische Störungen zu minimieren, wird hierbei lediglich eine einzige Heizstufe (niedriger Gesamtleistung) als kontinuierlich über PWM einstellbar ausgestaltet. Diese Heizstufe dient somit der Feineinstellung der Heizleistung. Die anderen Heizstufen sind nur binär schaltbar, sind also entweder ausgeschaltet oder geben die volle Heizleistung ab. Nur solche binär schaltbaren Heizstufen sind erfindungsgemäß als zweite Last geeignet.

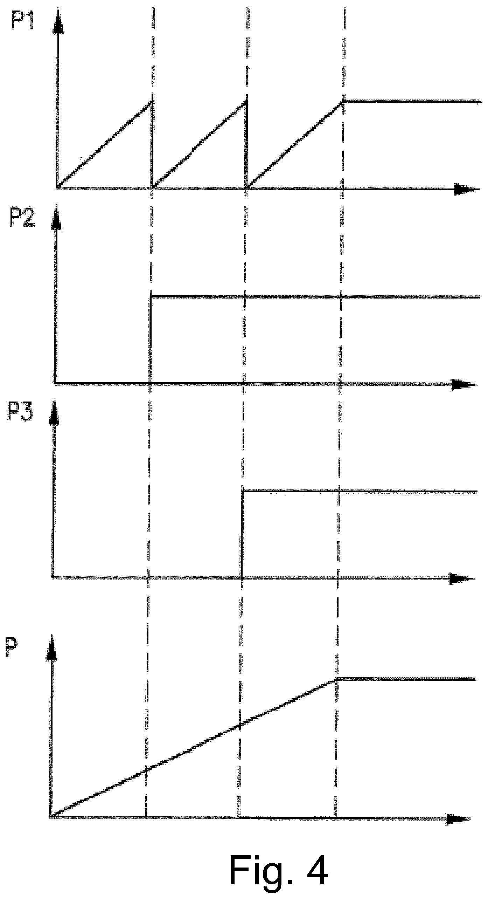

Das vorstehend beschriebene Konzept einer Ansteuerung einer Heizung mit mehreren Heizstufen, von denen lediglich eine über PWM stufenlos einstellbar ist, ist in Fig. 4 dargestellt.

In Fig. 4 sind Leistungs-Zeitdiagramme für drei Heizstufen (P1, P2, P3) dargestellt. Während die Leistung der Stufe P1 kontinuierlich durch PWM einstellbar ist, sind die Heizstufen P2 und P3 nur binär, zwischen 0 und 100 % Leistung, schaltbar. In dem dargestellten Beispiel wird zunächst die Leistung der ersten Heizstufe (P1) kontinuierlich von 0 bis zu der Maximalleistung der Heizstufe erhöht. Anschließend wird die zweite Heizstufe (P2) zugeschaltet, die Leistung der ersten Heizstufen (P1) fällt gleichzeitig wieder auf 0 und wird dann erneut bis zu der Maximalleistung erhöht. Schließlich wird der entsprechende Vorgang mit der dritten Heizstufe (P3) wiederholt. Das obere Diagramm zeigt die kontinuierliche Einstellung der ersten Heizstufe von 0 bis zur Maximalleistung, welche zeitlich nacheinander ohne Zuschaltung einer weiteren und nach dem Zuschalten nur der zweiten bzw. der zweiten und der dritten Heizstufe erfolgt. Die beiden mittleren Diagramme zeigen das entsprechende zeitversetzte Zuschalten der zweiten und dritten Heizstufe. In dem unteren Diagramm ist die Entwicklung der Gesamtheizleistung P (nicht maßstabsgerecht) dargestellt. In dem dargestellten Beispiel verfügen alle drei Heizstufen über die gleiche maximale Heizleistung. Wie dem unteren Diagramm gezeigt, ermöglicht dies eine kontinuierliche Einstellung der Gesamtheizleistung.

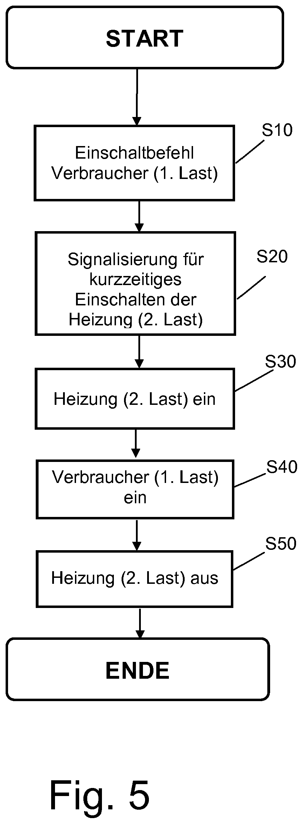

Ein Ablaufdiagramm für ein erfindungsgemäßes Betriebsverfahren eines Hochvolt-Kraftfahrzeugbordnetzes ist in Fig. 5 gezeigt.

In einem ersten Schritt (S10) erhält die Steuereinrichtung 40 einen Einschaltbefehl für einen Verbraucher (die erste Last 10). Je nach Art der ersten Last kann dies sowohl ein manuell von einem Benutzer (Fahrer) eingegebener Befehl sein, als auch ein über einen Fahrzeugbus von einer anderen Bordnetzkomponente empfangener Befehl.

Die Steuereinrichtung 40 stellt anhand dort hinterlegter Information fest, dass beim Einschalten der ersten Last 10 mit unerwünschten Störschwingungen im Bordnetz zu rechnen ist. Sie verzögert deshalb die Ausführung des Einschaltbefehls. Zunächst gibt die Steuereinrichtung 40 hierfür ein Signal zum kurzzeitigen Einschalten einer Heizeinrichtung (Kraftfahrzeugheizung insgesamt oder eine vorbestimmte Heizstufe geeigneter Impedanz) als zweite Last 20 an den Ansteuerkreis der Heizeinrichtung aus (Schritt S20).

Im anschließenden Schritt S30 empfängt der Ansteuerkreis das Signal und schaltet die Heizeinrichtung ein. Mit einer entsprechenden Verzögerung, die sicherstellt dass die Heizeinrichtung eingeschaltet wurde, schaltet die Steuereinrichtung 40 dann im Schritt S40 die erste Last 10 zu. Der beispielhaft angegebene Verfahrensablauf endet mit dem erneuten Abschalten der Heizeinrichtung 20 im Schritt S50. Wie bereits im Zusammenhang mit Fig. 3 beschrieben, kann die Zeitdauer des Einschaltens bereits in dem Einschaltsignal von der Steuereinrichtung 40 codiert sein, oder aber zu einem geeigneten Zeitpunkt wird ein separates Signal zum Ausschalten der Heizeinrichtung 20 von der Steuereinrichtung 40 generiert und zu dem Ansteuerkreis der Heizeinrichtung 20 übertragen.

Der Vollständigkeit halber sei betont, dass das erfindungsgemäße Ansteuerungskonzept nicht darauf beschränkt ist, dass eine Heizeinrichtung als die zweite Last kurzzeitig zugeschaltet wird. Vielmehr ist es auch möglich, einen anderen geeigneten Verbraucher im Hochvolt-Kraftfahrzeugbordnetz kurzzeitig als zweite Last zuzuschalten, um beim Einschalten einer ersten Last auftretende Störschwingungen zu unterdrücken.

Zusammenfassend, betrifft die vorliegende Patentanmeldung ein Hochvolt-Kraftfahrzeugbordnetz mit einer elektrischen Heizvorrichtung und wenigstens einem weiteren Verbraucher, bei dessen Einschalten unerwünschte elektromagnetische Schwingungen in dem Bordnetz auftreten können. Diese werden erfindungsgemäß unterdrückt, indem die Heizvorrichtung zunächst eingeschaltet wird, bevor der weitere Verbraucher zugeschaltet wird. Das Einschalten der Heizvorrichtung ändert die Gesamtimpedanz des Bordnetzes derart, dass eine resonante Verstärkung der Störschwingungen vermieden wird. Vorzugsweise wird die Heizvorrichtung nur so kurz wie möglich (nur während des Einschaltvorgangs des weiteren Verbrauchers) zugeschaltet, um ein unerwünschtes Heizen zu minimieren.

## Patentansprüche

1. Hochvolt-Kraftfahrzeugbordnetz, umfassend:
wenigstens eine erste Last (10), eine zweite Last (20) und eine Steuereinheit (40),
wobei
die erste Last (10) und die zweite Last (20) individuell zuschaltbar sind,
die erste Last (10) einen elektrischen Traktionsmotor (12a) des Kraftfahrzeugs und eine dazugehörige Leistungselektronik (12b) umfasst, und
die zweite Last (20) eine Heizeinrichtung umfasst, wobei das Zuschalten der zweiten Last (20) die Impedanz des Kraftfahrzeugbordnetzes derart verändert, dass das Zuschalten der zweiten Last (20) vor dem Zuschalten der ersten Last (10) die Entstehung von elektromagnetischen Schwingungen in dem Kraftfahrzeugbordnetz bei dem Zuschalten der ersten Last verhindert beziehungsweise minimiert und **dadurch gekennzeichnet dass**
die Steuereinrichtung (40) eingerichtet ist, bei einem von einem Benutzer eingegebenen Einschaltbefehl für die erste Last (10) zunächst ein Signal zum Einschalten der zweiten Last (20) auszugeben und das Ausführen des Einschaltbefehls für die erste Last (10) bis nach dem Einschalten der zweiten Last (20) zu verzögern und dadurch die zweite Last (20) jeweils vor dem Zuschalten der ersten Last (10) zuzuschalten, wobei das Zuschalten der zweiten Last (20) wenigstens für die Dauer (Δt) eines Einschaltvorgangs der ersten Last (10) erfolgt.

2. Hochvolt-Kraftfahrzeugbordnetz nach Anspruch 1, wobei die erste Last (10) einen Pulswechselrichter (11) umfasst.

3. Hochvolt-Kraftfahrzeugbordnetz nach Anspruch 1 oder 2, wobei das Zuschalten der zweiten Last (20) für eine Zeitdauer (ΔT) von weniger als 10 Sekunden erfolgt.

4. Hochvolt-Kraftfahrzeugbordnetz nach Anspruch 3, wobei das Zuschalten der zweiten Last (20) für eine Zeitdauer (ΔT) von weniger als 5 Sekunden erfolgt.

5. Hochvolt-Kraftfahrzeugbordnetz nach einem der Ansprüche 1 bis 4, mit einer Heizvorrichtung, die mehrere Heizstufen umfasst, von denen eine bestimmte Heizstufe als die zweite Last (20) kurzzeitig vor dem Zuschalten der ersten Last (10) zugeschaltet wird.

6. Hochvolt-Kraftfahrzeugbordnetz nach Anspruch 5, mit mehreren Heizstufen unterschiedlicher Leistung, wobei die bestimmte Heizstufe die leistungsstärkste Heizstufe ist.

7. Hochvolt-Kraftfahrzeugbordnetz nach einem der Ansprüche 1 bis 6, mit einer Heizvorrichtung, die mehrere Heizstufen unterschiedlicher Leistung umfasst und mit einer individuell zuschaltbaren dritten Last, wobei vordem Einschalten der ersten und der dritten Last jeweils unterschiedliche Heizstufen kurzzeitig zugeschaltet werden.

8. Verfahren zum Betreiben eines Hochvolt-Kraftfahrzeugbordnetzes (1, 1'), wobei das Hochvolt-Kraftfahrzeugbordnetz (1, 1') wenigstens eine individuell zuschaltbare erste Last (10) und eine individuell zuschaltbare zweite Last (20) umfasst, wobei die erste Last (10) einen elektrischen Traktionsmotor (12a) des Kraftfahrzeugs und eine dazugehörige Leistungselektronik (12b) umfasst, wobei die zweite Last (20) eine elektrische Heizeinrichtung umfasst, deren Zuschalten die Impedanz des Kraftfahrzeugbordnetzes (1, 1') derart verändert, dass das Zuschalten der zweiten Last (20) vor dem Zuschalten der ersten Last (10) die Entstehung von elektromagnetischen Schwingungen in dem Kraftfahrzeugbordnetz (1, 1') bei dem Zuschalten der ersten Last (10) verhindert beziehungsweise minimiert und das Verfahren die Schritte umfasst Empfangen (S10) eines Einschaltbefehls für die erste Last (10) von einem Benutzer, Ausgeben (S20) eines Signals zum Einschalten der zweiten Last (20), nach dem Empfangen (S10) des Einschaltbefehls,
Zuschalten (S40) der ersten Last (10) und
Zuschalten (S30) der zweiten Last (20) vor dem Zuschalten (S40) der ersten Last (10), wobei das Ausführen (S40) des Einschaltbefehls für die erste Last (10) verzögert, nach dem Einschalten der zweiten Last (20), erfolgt und **dadurch gekennzeichnet dass**
das Zuschalten der zweiten Last (20) wenigstens für die Dauer (Δt) eines Einschaltvorgangs der ersten Last (10) erfolgt.

9. Verfahren nach Anspruch 8, wobei das Zuschalten der zweiten Last (20) für eine Zeitdauer (ΔT) von weniger als 10 Sekunden erfolgt.

10. Verfahren nach Anspruch 9, wobei das Zuschalten der zweiten Last (20) für eine Zeitdauer (ΔT) von weniger als 5 Sekunden erfolgt.

## Claims

1. High-voltage motor vehicle on-board power supply, comprising:
at least a first load (10), a second load (20) and a control unit (40), wherein
the first load (10) and the second load (20) can be connected separately,
the first load (10) comprises an electric traction motor (12a) of the motor vehicle and associated power electronics (12b), and
the second load (20) comprises a heating device,
wherein
connecting the second load (20) changes the impedance of the motor vehicle on-board power supply such that connecting the second load (20) before connecting the first load (10) prevents or minimizes the generation of electromagnetic oscillations in the motor vehicle on-board power supply during the connection of the first load and **characterized in that**
in the event of a command for switching on the first load (10) entered by a user, the controller (40) is configured to first output a signal for switching on the second load (20) and to delay the execution of the command for switching on the first load (10) until after the second load (20) has been switched on and thereby to connect the second load (20) before the first load (10) is connected, the second load (20) being connected at least for the duration (Δt) of an operation for switching on the first load (10).

2. High-voltage motor vehicle on-board power supply, according to claim 1, wherein the first load (10) comprises a pulse inverter (11).

3. High-voltage motor vehicle on-board power supply according to claims 1 or 2, wherein the second load (20) is connected for a time period (ΔT) of less than 10 seconds.

4. High-voltage motor vehicle on-board power supply according to claim 3, wherein the second load (20) is connected for a time period (ΔT) of less than 5 seconds.

5. High-voltage motor vehicle on-board power supply according to one of claims 1 to 4, having a heating device comprising several heating stages, of which a predetermined heating stage is connected as the second load (20) shortly before the first load (10) is connected.

6. High-voltage motor vehicle on-board power supply according to claim 5, having several heating stages of different power, wherein the predetermined heating stage is the most powerful heating stage.

7. High-voltage motor vehicle on-board power supply according to one of claims 1 to 6, having a heating device comprising several heating stages of different power and with an individually connectable third load, wherein different heating stages are respectively connected for a short period before the first and the third load are switched on.

8. Method for operating a high-voltage motor vehicle on-board power supply (1, 1'), the high-voltage motor vehicle on-board power supply (1, 1') comprising at least one first load (10) which can be connected separately and a second load (20) which can be connected separately, the first load (10) comprising an electric traction motor (12a) of the motor vehicle and associated power electronics (12b), the second load (20) comprising an electric heating device, the connection of which changes the impedance of the motor vehicle on-board power supply (1, 1') such that connecting of the second load (20) before connecting of the first load (10) prevents or minimizes the generation of electromagnetic oscillations in the motor vehicle on-board power supply (1, 1') when the first load (10) is connected, the method comprising the following steps
receiving (S10) a command for switching on the first load (10) from a user,
outputting (S20) a signal for switching on the second load (20) after receiving (S10) the command for switching on,
connecting (S40) the first load (10) and
connecting (S30) the second load (20) before connecting (S40) the first load (10),
wherein the execution (S40) of the command for switching on the first load (10) is delayed until after the second load (20) has been switched on, and
**characterized in that** the second load (20) is connected at least for the duration (Δt) of an operation for switching on the first load (10).

9. A method according to claim 8, wherein the second load (20) is connected for a time period (ΔT) of less than 10 seconds.

10. A method according to claim 9, wherein the second load (20) is connected for a time period (ΔT) of less than 5 seconds.

## Revendications

1. Réseau d'alimentation de bord de véhicule automobile à haute tension, comprenant:
au moins une première charge (10), une deuxième charge (20) et une unité de commande (40), dans lequel
la première charge (10) et la deuxième charge (20) peuvent être activées individuellement,
la première charge (10) comprend un moteur de traction électrique (12a) du véhicule automobile et l'électronique de puissance associée (12b), et
la deuxième charge (20) comprend un dispositif de chauffage,
dans lequel la connexion de la deuxième charge (20) modifie l'impédance du réseau d'alimentation de bord de véhicule automobile à haute tension de telle sorte que la connexion de la deuxième charge (20) avant la connexion de la première charge (10) empêche ou minimise la génération d'oscillations électromagnétiques dans le réseau d'alimentation de bord de véhicule automobile à haute tension lorsque la première charge est connectée et **caractérisé en ce que** le dispositif de commande (40) est mis en place, dans le cas d'une commande de mise en marche pour la première charge (10) entrée par un utilisateur, d'abord pour émettre un signal pour la mise en marche de la deuxième charge (20) et pour retarder l'exécution de la commande de mise en marche pour la première charge (10) jusqu'après la mise en marche de la deuxième charge (20) et ainsi mettre en marche la deuxième charge (20) à chaque fois avant la mise en marche de la première charge (10), la deuxième charge (20) étant mise en marche au moins pendant la durée (ΔT) d'un processus de mise en marche de la première charge (10).

2. Réseau d'alimentation de bord de véhicule automobile à haute tension selon la revendication 1, dans lequel la première charge (10) comprend un onduleur d'impulsions (11).

3. Réseau d'alimentation de bord de véhicule automobile à haute tension selon les revendications 1 ou 2, dans lequel la deuxième charge (20) est mise en marche pendant une durée (ΔT) inférieure à 10 secondes.

4. Réseau d'alimentation de bord de véhicule automobile à haute tension selon la revendication 3, dans lequel la deuxième charge (20) est connectée pendant une période de temps (ΔT) inférieure à 5 secondes.

5. Réseau d'alimentation de bord de véhicule automobile à haute tension selon l'une des revendications 1 à 4, avec un dispositif de chauffage comprenant plusieurs étages de chauffage, dont un étage de chauffage spécifique est mis en marche en tant que deuxième charge (20) peu avant la mise en marche de la première charge (10).

6. Réseau d'alimentation de bord de véhicule automobile à haute tension selon la revendication 5, avec plusieurs étages de chauffage de puissance différente, l'étage de chauffage spécifique étant l'étage de chauffage le plus puissant.

7. Réseau d'alimentation de bord de véhicule automobile à haute tension selon l'une des revendications 1 à 6, avec un dispositif de chauffage comprenant plusieurs étages de chauffage de puissance différente et avec une troisième charge pouvant être mise en marche individuellement, les différents étages de chauffage étant mis en marche brièvement à chaque fois avant la mise en marche de la première et de la troisième charge.

8. Procédé pour faire fonctionner un réseau d'alimentation de bord de véhicule automobile à haute tension (1, 1'), le réseau d'alimentation de bord de véhicule automobile à haute tension (1, 1') comprenant au moins une première charge (10) pouvant être connectée individuellement et une deuxième charge (20) pouvant être connectée individuellement, la première charge (10) comprenant un moteur de traction électrique (12a) du véhicule automobile et une électronique de puissance associée (12b), dans lequel la deuxième charge (20) comprend un dispositif de chauffage électrique, dont la connexion modifie l'impédance du réseau d'alimentation de bord de véhicule automobile à haute tension (1, 1') de telle manière que la connexion de la deuxième charge (20) avant la connexion de la première charge (10) empêche ou minimise la génération d'oscillations électromagnétiques dans le réseau d'alimentation de bord de véhicule automobile à haute tension (1, 1') lorsque la première charge (10) est connectée, et le procédé comprend les étapes consistant à
recevoir (S10) une commande de mise sous tension pour la première charge (10) d'un utilisateur, émettre (S20) un signal pour mettre sous tension la deuxième charge (20) après avoir reçu (S10) la commande de mise sous tension,
raccorder (S40) la première charge (10) et
mettre en marche (S30) la deuxième charge (20) avant que la première charge (10) ne soit mise en marche (S40), l'exécution (S40) de la commande de mise en marche de la première charge (10) étant retardée après la mise en marche de la deuxième charge (20), et
**caractérisé en ce que** la deuxième charge (20) est connectée au moins pendant la durée (ΔT) d'une opération de mise en marche de la première charge (10).

9. Procédé selon la revendication 8, dans laquelle la connexion de la deuxième charge (20) a lieu pendant une période de temps (ΔT) de moins de 10 secondes.

10. Procédé selon la revendication 9, dans laquelle la deuxième charge (20) est connectée pendant un temps (ΔT) inférieur à 5 secondes.
